# EUROPEAN PATENT APPLICATION

(11) **EP 2 529 611 A1**
(43) Date of publication of application: **05.12.2012**
(21) Application number: 12275072.2
(22) Date of filing: 21.05.2012
(51) Int. Cl.: A01D 34/01

(54) **A cutter**

(30) Priority: 02.06.2011 GB 201109232
(71) Applicant: Roberts, Ken, Nottingham NG13 0BZ (GB)
(72) Inventor: Roberts, Ken, Nottingham NG13 0BZ (GB)
(74) Representative: Mitchell, Darren Andrew

(57) **Abstract**

In the field of cutters for elongate plant material extending from a plant-covered surface, there is a need for an improved cutter which is able to operate with reduced wear while providing even cutting.

A cutter (10), for cutting grass blades arranged on a grass-covered surface, comprises a rotatable cutting member (12) that is rotatably mounted on a cutting member axis (14), and a reaction member (16) which extends parallel to the cutting member axis (12). The rotatable cutting member (12) includes a first surface portion (28) which selectively abuts a corresponding abutting portion (54) of the reaction member (16) to, in use, cut a an elongate plant member lying between the corresponding first surface portion (28) of the rotatable cutting member (12) and the abutting portion (54) of the reaction member (16). The first surface portion (28) is or includes an abrasive surface.

## Description

The following invention relates to a cutter, and in particular a cutter that is suitable for cutting elongate plant material extending from a plant-covered surface.

One type of cutter used to cut, e.g. grass, is a lawnmower. A form of conventional lawnmower, known generally as a cylinder lawnmower, includes one or more moveable blades each of which cooperates with a fixed member in a shearing manner to sever one or more grass blades extending therebetween. The shearing action of the or each moveable blade relative to the fixed member, during which the or each moveable blade slides over the fixed member, has a tendency to degrade the cutting edge on the or each moveable blade which reduces the effectiveness of the lawnmower.

One way in which such wear of the or each moveable blade may be reduced is to omit the fixed member. Such lawnmowers, which typically comprise so-called rotary lawnmowers, rely on the moveable blade impacting respective grass blades with very high force to effect cutting of the grass. The reliance on such high impact forces, however, results in an uneven cutting of the grass blades since the grass blades themselves have a tendency to be deformed by the applied force.

There is, therefore, a need for an improved cutter that is able to operate with reduced wear while providing even cutting of, e.g. grass blades arranged on a grass-covered surface.

In a first aspect of the invention there is provided a cutter, for cutting elongate plant material extending from a plant-covered surface, comprising a rotatable cutting member rotatably mounted on a cutting member axis, and a reaction member extending parallel to the cutting member axis, the rotatable cutting member including a first surface portion which selectively abuts a corresponding abutting portion of the reaction member to, in use, cut an elongate plant member lying between the corresponding first portion of the rotatable cutting member and the abutting portion of the reaction member, the cutter being **characterised in that** the first surface portion is or includes an abrasive surface.

Arranging the rotatable cutting member to selectively abut the reaction member results in low wear of the cutting member because there is no contact between the cutting member and the reaction member since the grass blade lies therebetween when severed.

In addition, having the cutting member cooperate with the reaction member in an abutting manner, helps to ensure that any grass blade lying therebetween is not deformed while being cut, and so results in even cutting of respective grass blades.

Furthermore, the inclusion of a first surface portion that is or includes an abrasive surface causes the reaction member to adopt a reaction member surface formation which is substantially the inverse of a cutting surface formation of the first surface portion. Such inverse surface formations helps to further ensure that there is no direct contact between the cutting member and the reaction member during further rotation of the cutting member, which in turn further assists in minimising wear of the cutting member.

The inclusion of such abrasive surface also provides an improved cutting effect by increasing the effective cutting surface area between the cutting member and the reaction member

Preferably the first surface portion extends helically along the cutting member axis.

Optionally the first surface portion extends cylindrically around the cutting member axis.

Such arrangements provide for the necessary selective abutting of the first surface portion of the cutting member with the corresponding abutting portion of the reaction member while being readily manufacturable.

The cutting member may additionally include a second surface portion, the second surface portion extending radially from the cutting member axis to a lesser extent than the first surface portion. This provides the desired selective abutting of the cutting member against the reaction member while selectively providing spacing of the cutting member from the reaction member to allow an elongate plant member, e.g. a grass blade, to move between the cutting member and the reaction member.

In a further embodiment of the invention, the cutting member includes first and second cutting member portions, each of the cutting member portions including respective first and second surface portions, the respective first surface portions selectively abutting the reaction member at substantially different periods during rotation of the cutting member.

Such an arrangement allows for selective abutting of respective cutting member potions against the reaction member, i.e. elongate plant member cutting, and selective spacing of the cutting member portions from the reaction member, i.e. ingress of an elongate plant member between the respective cutting member portions and the reaction member at the same time along a given length of the cutting member.

Optionally, the first surface portions of both cutting member portions selectively abut the reaction member at the same time during at least a portion of the rotation of the cutting member. This helps to ensure uniform loading of the reaction member, and helps to ensure the reaction member is spaced from the cutting member axis to the same extent during rotation of the cutting member.

Preferably, the reaction member is resiliently biased towards the cutting member. Such an arrangement helps to further ensure uniform spacing between the cutting member and the reaction member.

In another embodiment of the invention, the cutting member further includes a third cutting member portion which has further respective first and second surface portions, the third cutting member portion being arranged adjacent to a second end of the first cutting member portion lying opposite a first end of the first cutting member portion adjacent to which lies the second cutting member portion. The inclusion of a third cutting member portion additionally helps to ensure uniform radial loading along the entire length of the cutting member.

Preferably, the combined length of the second and third cutting member portions is substantially equal to the length of the first cutting member portion. This further helps to ensure uniform radial loading along the length of the cutting member.

Optionally, the respective first surface portions of the second and third cutting member portions are aligned with one another relative to the cutting member axis. Arranging the second and third cutting member portions in this way ensures that they impart the same radial loading on the cutting member axis which, in turn, can be used to counter balance the loading imparted by the first cutting member portion.

In one embodiment of the invention, the cutter further includes a cleaning member arranged to selectively engage with the or each first surface portion of the cutting member. The cleaning member assists in the removal of residual plant-cutting debris from the cutting member.

Preferably, the cleaning member is resiliently deformable. This allows the cleaning member to engage with the whole external surface of the cutting member.

The cutter may further include a fluid dispenser arranged in fluid communication with the cleaning member to selectively apply a fluid to the cleaning member. The fluid may advantageously be selected to dissolve plant cuttings, and so further improve the cleaning effect of the cleaning member.

In a further embodiment, the cutting member is rotatable in a first cutting direction and a second cleaning direction opposite the first direction. Such a feature further improves cleaning of the cutting member.

According to a second aspect of the invention there is provided a cutter assembly comprising a cutter chassis having at least one rotatable member secured thereto to allow movement of the cutter chassis over a grass-covered surface, the cutter chassis further having secured thereto a cutter as described herinabove. The cutter assembly shares the advantages of the cutter mentioned above.

There now follows, by way of a non-limiting example, a brief description of preferred embodiments of the invention with reference to the following figures, in which:
Figure 1 shows a schematic partial view from above of a cutter according to a first embodiment of the invention;
Figure 2(a) shows a cross-sectional view through section A-A of Figure 1;
Figure 2(b) shows a cross-sectional view through section B-B of Figure 1;
Figure 3 shows a method of assembling the cutting member shown in Figure 1;
Figure 4 shows a schematic partial view from above of a cutter according to a second embodiment of the invention;
Figure 5 shows an enlarged view of a portion of Figures 1 and 4 immediately prior to cutting of an elongate plant member; and
Figure 6 shows an elevational view from a first side of a cutter assembly according to an embodiment of the invention.

A cutter according to a first embodiment of the invention is designated generally by reference numeral 10.

The cutter 10 includes a rotatable cutting member 12 that is rotatably mounted on a cutting member axis 14. The cutter 10 also includes a reaction member 16 which extends parallel to the cutting member axis 14. The rotatable cutting member 12 selectively abuts the reaction member 16.

In the embodiment shown the cutting member 12 includes first, second and third cutting member portions 18, 20, 22.

As shown, the second cutting member portion 20 lies adjacent to a first end 24 of the first cutting member portion 18 while the third cutting member portion 22 lies adjacent to a second end 26 (opposite the first end 24) of the first cutting member portion 18. The length 2L of the first cutting member portion 18 is twice the length L of each of the second and third cutting member portions 20, 22.

In other embodiments of the invention (not shown) the cutting member 12 may include greater than or fewer than three cutting member portions, and the individual cutting member portions may have relative lengths which differ from those mentioned above.

Each cutting member portion 18, 20, 22 includes first and second surface portions 28, 30. Each first surface portion 28 extends cylindrically around the cutting member axis 14 and extends radially from the cutting member axis 14 to a greater extent than the second surface portion 30.

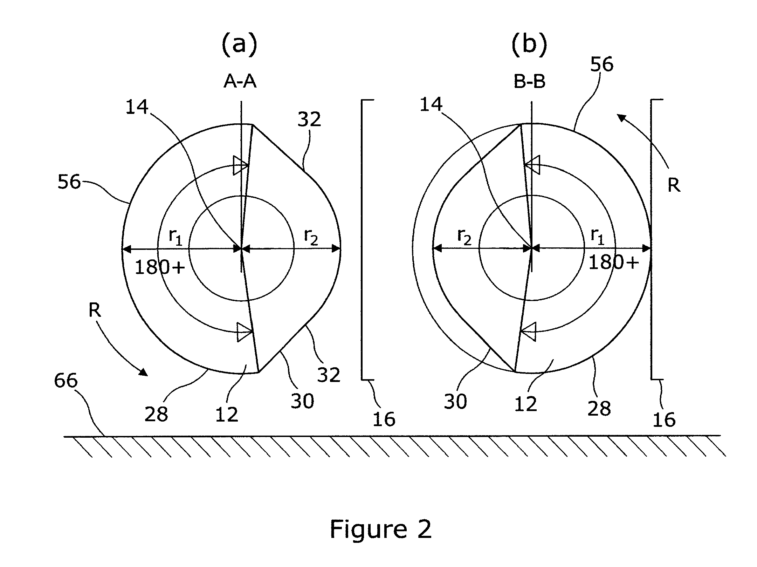

In particular, in the embodiment shown the first surface portion 28 of each cutting member portion 18, 20, 22 extends uniformly from the cutting member axis 14 by a first radius r₁, as shown in Figures 2(a) and 2(b). Each second surface portion 30 extends from the cutting member axis 14 by a maximum second radius r₂. The portion of each second surface portion 30 extending between the maximum second radius r₂ defines a smooth transition region 32 between the maximum second radius r₂ and the first surface portion 28, as also shown in Figures 2(a) and 2(b).

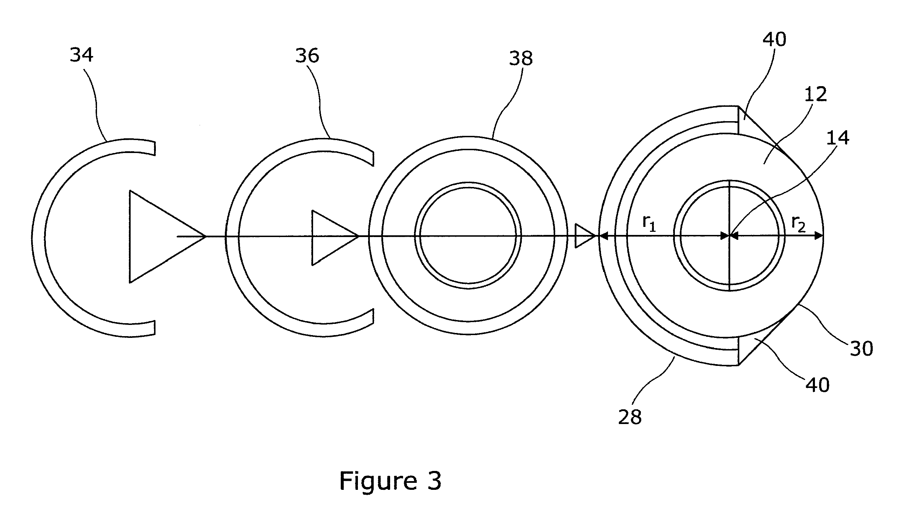

One way in which such first and second surface portions 28, 30 may be formed on a respective cutting member portion 18, 20, 22 is illustrated schematically in Figure 3. First and second cylindrical portions 34, 36 may be laid over a cylindrical core 38 and adhered thereto, and a filler body 40 may be applied to the interface between the cylindrical portions 34, 36 and the core 38.

In the embodiment shown each of the first and second surface portions 28, 30 includes an abrasive surface 56. The inclusion of an abrasive surface 56 on the second surface portion 30 helps to further urge one or more elongate plant members between the cutting member and the reaction member.

Preferably the abrasive surface is defined by an abrasive material, e.g. grit, which is adhered to the respective cutting member portion 18, 20, 22, or an abrasive fabric which is similarly adhered to a given cutting member portion 18, 20, 22. The texture of the abrasive surface can vary from fine to course depending on the cutting operation to be undertaken, but is most preferably approximately 60 grit.

As shown in Figures 2(a) and 2(b), the first surface portion 28 of each of the first and second cutting member portions 18, 20 extends over slightly more than half of the whole peripheral surface of the respective cutting member portion 18, 20. The respective first surface portions 28 are also arranged to oppose one another about the cutting member axis 14. In other words, the first surface portion 28 of the second cutting member portion 20 (as shown in Figure 2(a)) extends substantially in a first direction while the first surface portion 28 of the first cutting member portion 18 (as shown in Figure 2(b)) extends substantially in a second direction which is opposite the first direction.

The foregoing features together mean that the respective first surface portions 28 selectively abut the reaction member 16 at substantially different periods during rotation of the cutting member 12.

In addition, however, having the first surface portion 28 of each cutting member portion 18, 20 extend a little over half of the whole peripheral surface of the cutting member portion 18, 20 results in the first surface portion 28 of one cutting member portion 18 overlapping radially with the first surface portion 28 of the other cutting member portion 20. Such radial overlapping ensures that portions of the first surface portion 28 of each cutting member portion 18, 20 abut the reaction member 16 at the same time during rotation of the cutting member 12.

Such an arrangement means that one portion of the cutting member 12, i.e. at least one portion of either the first or second cutting member portion 18, 20 always abuts the reaction member 16. This configuration is desirable in arrangements, as in the embodiment shown, in which the reaction member 16 is resiliently biased towards the cutting member 12.

The third cutting member portion 22 is essentially identical to the second cutting member portion 20 and is arranged relative to the second cutting member portion 20 such that their respective first surface portions 28 are aligned with one another along the cutting member axis 14.

In this manner the radial loading imparted by the first cutting member portion 18 is balanced by the radial loading imparted by each of the second and third cutting member portions 20, 22 such that the cutting member 12 is able to rotate about the cutting member axis 14 without generating undue vibration.

The cutter 10 additionally includes a cleaning member 42 that is resiliently deformable and arranged to sweep across each of the first and second surface portions 28, 30 of the respective cutting member portions 18, 20, 22. Preferably the cleaning member 42 comprises a plurality of resiliently deformable bristles (not shown), although other forms of cleaning member are also possible. For example, in other embodiments of the invention (not shown) the cleaning member may be an elongate beam member against which the cutting member 12 selectively abuts.

A fluid dispenser 44 is arranged in fluid communication with the cleaning member 42 and is configured to apply a fluid to the cleaning member. The fluid may be water, or water with a detergent added thereto. Optionally a pump may be included to urge the fluid from the fluid dispenser 44 to the cleaning member 42.

In use the cutting member 12 is rotatable in a first, cutting, direction R, e.g. by an electric motor 46 or a combustion engine. In the case of rotation by an electric motor 46, a fuse (not shown) is included in a control circuit for the motor to protect the motor in the event of the cutting member 12 stalling or becoming jammed. When rotated by a combustion engine a gearbox may be inserted between the cutting member 12 and the engine.

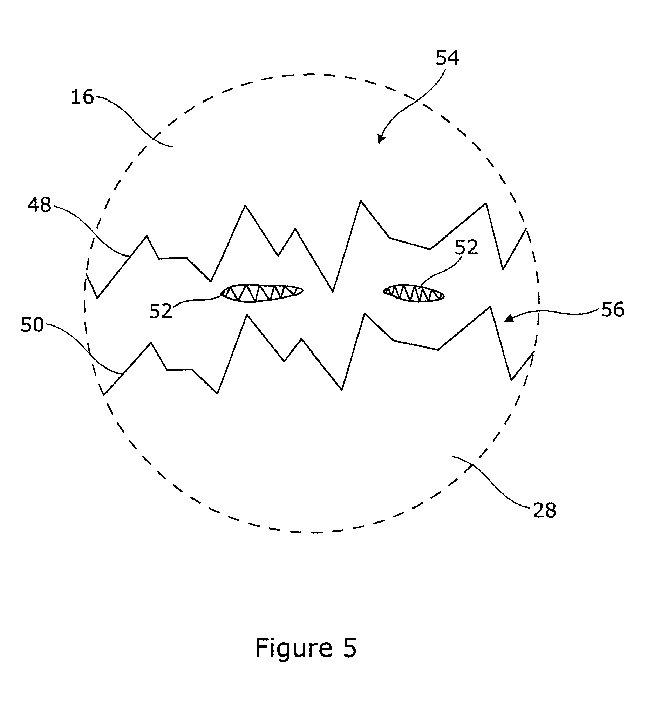

On the first rotation of the cutting member 12 relative to the associated reaction member 16 the cutter 10 is "run in", i.e. any excess material from the reaction member 16 is removed by the abrasive action of the respective cutting member portions 18, 20, 22. This removal of material from the reaction member 16 results in the reaction member 16 adopting a reaction member surface formation 48 which is substantially the inverse of a cutter surface formation 50 on the first surface portion 28 of the respective cutting member portions 18, 20 22 of the cutting member 12, as shown in Figure 5. The inclusion of such complementary surface formations 48, 50 helps to ensure that there is no subsequent direct contact between the cutting member 12 and the reaction member 16 during further rotation of the cutting member 12, which in turn further assists in minimising wear of the cutting member 12.

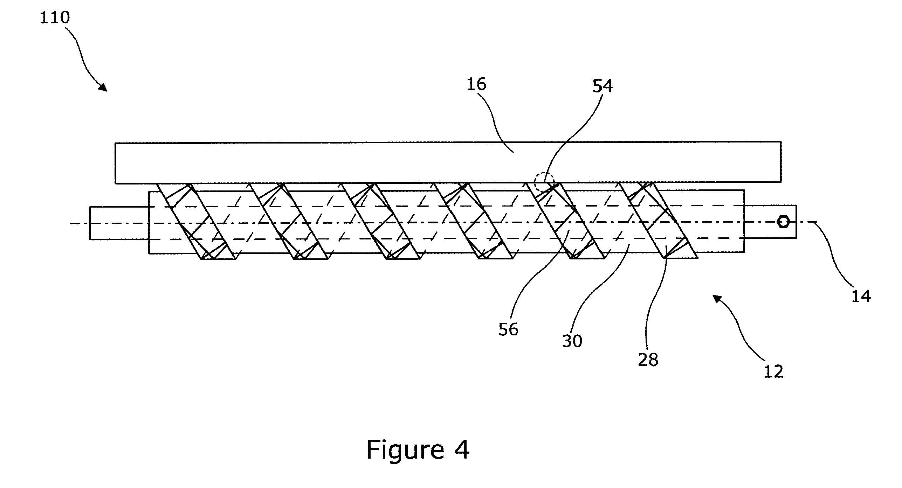

At a first rotational position of a given cutting member portion 18, 20, 22 about the cutting member axis 14 the second surface portion 30 of the said cutting member portion 18, 20, 22 is spaced from the reaction member 16, e.g. as shown in Figures 2(a) and 4. Such spacing allows the ingress of an elongate plant member 52, e.g. a grass blade, between the cutting member portion 18, 20, 22 and the reaction member 16.

Further rotation of the respective second surface portion 30 causes the smooth transition region 32 between the first and second surface portions 28, 30 to urge the grass blade further between the cutting member portion 18, 20, 22 and the reaction member 16, and thereby pull the elongate plant member 52 taught.

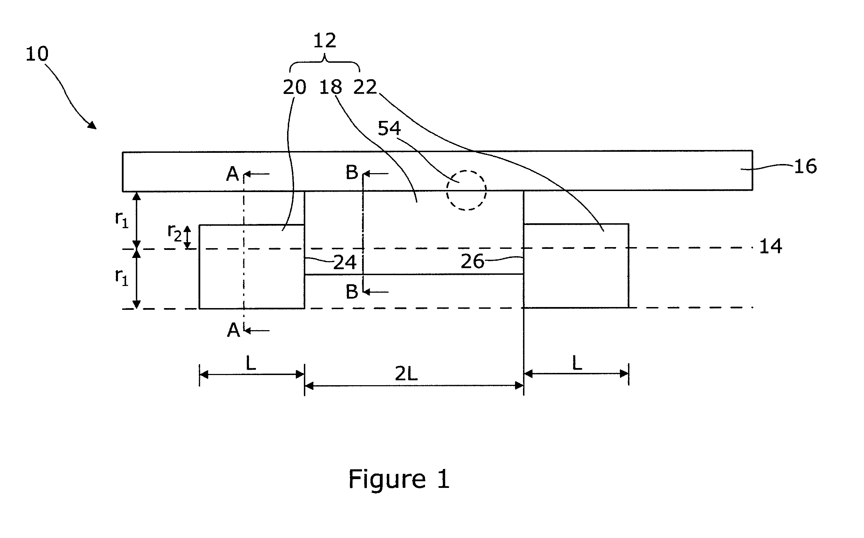

Continued rotation causes the first surface portion 28 to abut a corresponding abutting portion 54 of the reaction member 16, as shown in Figures 1 and 2(b), and thereby squeeze an elongate plant member 52, e.g. a grass blade, therebetween. Such squeezing ruptures the plant members and affects a cut of the plant member.

Further rotation of the cutting member portion 18, 20, 22 urges the severed plant member into a receptacle, such as a hammock suspended adjacent to the cutter 10.

The aforementioned cutting cycle is then ready to begin again.

The cutting member 12 may be rotated continuously, as per a conventional grass cutter or, alternatively, it may be rotated intermittently for as little as one rotation.

The cutting member 12 is also rotatable in a second, cleaning, direction which is opposite to the first cutting direction R.

When rotating in the second cleaning direction the cleaning member 42 sweeps across the first and second surfaces 28, 30 of each cutting member portion 18, 20 22 to remove any plant cutting debris temporarily adhered thereto.

A cutter according to a second embodiment of the invention is illustrated schematically in Figure 4.

The second cutter 110 is similar to the first cutter 10, and like features share the same reference numerals.

The second cutter 110 includes a rotatable cutting member 12 and a reaction member 16 which extends parallel to the cutting member 12. The rotatable cutting member 12 again selectively abuts the reaction member 16, which may or may not be resiliently biased towards the cutting member 12.

One way in which the second cutter 110 differs from the first cutter 10 is that the cutting member 12 includes a first surface portion 28 which extends helically along the cutting member axis 14. Accordingly, as the cutting member 12 rotates the first surface portion 28 selectively abuts corresponding different abutting portions 54 of the reaction member 16.

The first surface portion 28 extends radially from the cutting member axis 14 to a greater extent than a second surface portion 30 which lies adjacent to the first surface portion 28.

In the embodiment shown the first surface portion 28 includes an abrasive surface 56, while the second surface portion 30 does not.

As in the first cutter 10, the abrasive surface 56 of the first surface portion 28 in the second cutter 110 preferably is defined by an abrasive material, e.g. grit, which is adhered to the first surface portion 28, or an abrasive fabric which is similarly adhered to the first surface portion 28. The texture of the abrasive surface can again vary from fine to course depending on the cutting operation to be undertaken, but is most preferably approximately 60 grit.

The second cutter 110 may additionally include a cleaning member 42 and a fluid dispenser 44 as described hereinabove.

In use the cutting member 12 is rotatable in a first, cutting, direction, e.g. by an electric motor 46.

On the first rotation of the cutting member 12 relative to the associated reaction member 16 the second cutter 110 is again "run in", i.e. any excess material from the reaction member 16 is removed by the abrasive action of the first surface portion 28, such that a substantially inverse reaction member surface formation 48 is again formed on the reaction member 16.

At a first rotational position of the cutting member 12 about the cutting member axis 14 the first surface portion 28 abuts a corresponding abutting portion 54 of the reaction member 16, while the immediately adjacent second surface portion 30 on either side of the first surface portion 28 is spaced from the reaction member 16, as shown in Figure 4. Such spacing allows the ingress of an elongate plant member 52 between the cutting member 12 and the reaction member 16.

Further rotation of the cutting member 12 causes the helical first surface portion 28 to urge the elongate plant member 52 further between the first surface portion 28 and the corresponding abutting portion 54 the reaction member 16, and thereby pull the elongate plant member taught.

Continued rotation causes the first surface portion 28 to abut the corresponding abutting portion 54 of the reaction member 16, as shown in Figure 4, and thereby squeeze an elongate plant member 52 therebetween. Such squeezing ruptures the plant member and affects a cut of the plant member.

Further rotation of the first surface portion 28 of the cutting member 12 urges the severed plant member 52 into a receptacle, such as a hammock suspended adjacent to the second cutter 110.

The aforementioned cutting cycle is then ready to begin again.

The cutting member 12 may again be rotated continuously, as per a conventional grass cutter or, alternatively, it may be rotated intermittently for as little as one rotation.

The cutting member 12 in the second cutter 110 is also rotatable in a second, cleaning, direction which is opposite to the first cutting direction.

When rotating in the second cleaning direction the optional cleaning member 42 sweeps across at least the first surface 28 of the cutting member 12 to remove any plant cutting debris temporarily adhered thereto.

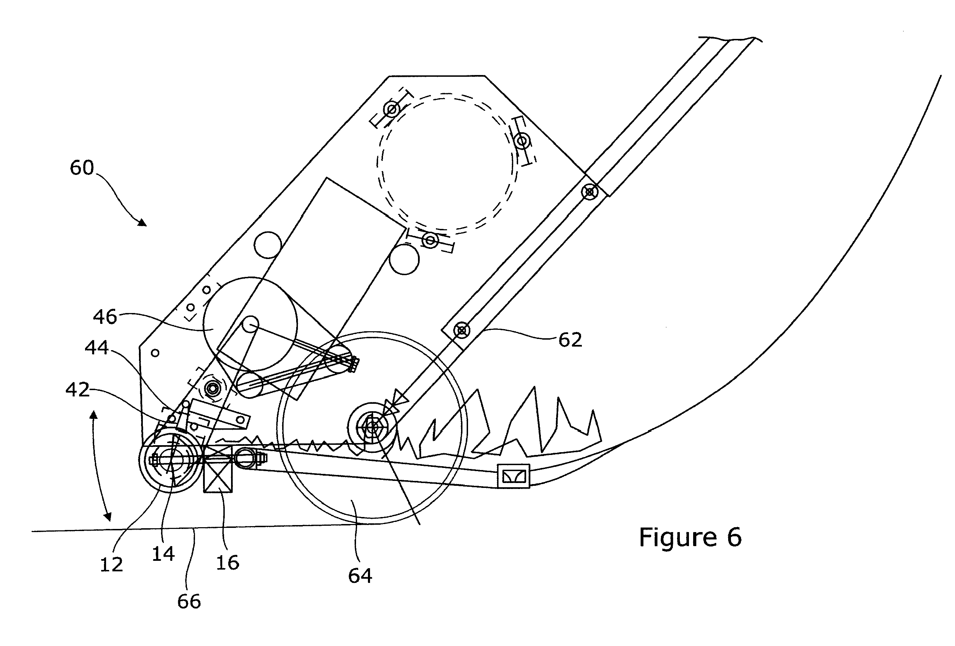

A cutter assembly 60 according to an embodiment of the invention is shown in Figure 6.

The cutter assembly 60 includes a cutter chassis 62 which has an elongate rotatable member 64 and a first cutter 10 secured thereto. The second cutter 110 described hereinabove is interchangeable with the first cutter 10 shown in Figure 6.

The rotatable member 64 allows movement of the cutter chassis 62, i.e. the cutter assembly 60, over a plant-covered surface 66, such as a lawn, embankment, field or the like, to effect plant member cutting as desired.

The cutter assembly may additionally include a pair of free-running rotatable members (not shown) that are coupled to the cutter chassis 62 to support the cutter 10; 110 a desired distance above the plant-covered surface 66. Interchangeable pairs of free-running rotatable members of differing dimensions may be provided to vary the distance above the surface 66, or mounting of the free-running rotatable members may be adjustable so as to provide variation of the said distance above the surface 66.

## Claims

1. A cutter, for cutting elongate plant material extending from a plant-covered surface, comprising a rotatable cutting member rotatably mounted on a cutting member axis, and a reaction member extending parallel to the cutting member axis, the rotatable cutting member including a first surface portion which selectively abuts a corresponding abutting portion of the reaction member to, in use, cut an elongate plant member lying between the corresponding first surface portion of the rotatable cutting member and the abutting portion of the reaction member, the cutter being **characterised in that** the first surface portion is or includes an abrasive surface.

2. A cutter according to Claim 1 wherein the first surface portion extends helically along the cutting member axis.

3. A cutter according to Claim 1 wherein the first surface portion extends cylindrically around the cutting member axis.

4. A cutter according to any preceding claim wherein the cutting member additionally includes a second surface portion, the second surface portion extending radially from the cutting member axis to a lesser extent than the first surface portion.

5. A cutter according to Claim 4 when dependent on Claim 3 or according to Claim 3 alone wherein the cutting member includes first and second cutting member portions, each of the cutting member portions including respective first and second surface portions, the respective first surface portions selectively abutting the reaction member at substantially different periods during rotation of the cutting member.

6. A cutter according to Claim 5 wherein the first surface portions of both cutting member portions selectively abut the reaction member at the same time during at least a portion of the rotation of the cutting member.

7. A cutter according to Claim 6 wherein the reaction member is resiliently biased towards the cutting member.

8. A cutter according to any of Claims 5 to 7 wherein the cutting member further includes a third cutting member portion which has further respective first and second surface portions, the third cutting member portion being arranged adjacent to a second end of the first cutting member portion lying opposite a first end of the first cutting member portion adjacent to which lies the second cutting member portion.

9. A cutter according to Claim 8 wherein the combined length of the second and third cutting member portions is substantially equal to the length of the first cutting member portion.

10. A cutter according to Claim 8 or Claim 9 wherein the respective first surface portions of the second and third cutting member portions are aligned with one another relative to the cutting member axis.

11. A cutter according to any preceding claim further including a cleaning member arranged to selectively engage with at least the first surface portion of the cutting member.

12. A cutter according to Claim 11 wherein the cleaning member is resiliently deformable.

13. A cutter according to Claim 11 or Claim 12 further including a fluid dispenser arranged in fluid communication with the cleaning member to selectively apply a fluid to the cleaning member.

14. A cutter according to any of Claims 11 to 13 wherein the cutting member is rotatable in a first cutting direction and a second cleaning direction opposite the first direction.

15. A cutter assembly comprising a cutter chassis having at least one rotatable member secured thereto to allow movement of the cutter chassis over a grass-covered surface, the cutter chassis further having secured thereto a cutter according to any of Claims 1 to 14.
